# EUROPEAN PATENT APPLICATION

(11) **EP 2 590 079 A1**
(43) Date of publication of application: **08.05.2013**
(21) Application number: 10854106.1
(22) Date of filing: 01.07.2010
(51) Int. Cl.: G06F 11/20, G06F 13/00

(54) **MONITORING CONTROL DEVICE, SERVER DEVICE, MONITORING CONTROL METHOD, AND MONITORING CONTROL PROGRAM**

(71) Applicant: Fujitsu Limited, Kawasaki-shi, Kanagawa 211-8588 (JP)
(72) Inventor: MASE, Tomonori, Kawasaki-shi Kanagawa 211-8588 (JP)
(74) Representative: HOFFMANN EITLE
(86) International application number: PCT/JP2010/061281
(87) International publication number: WO 2012/001809

(57) **Abstract**

A monitoring control device (1) includes a storage unit (11) that stores attribute information on a component incorporated in a server device, and a control unit (12) that determines, upon the detection of a request for reading out the attribute information on the component from outside, whether readout of the attribute information from the storage unit (11) according to the request of readout is possible or not and, when it is determined that the readout of the attribute information is impossible, ordering a control unit in a standby mode, which is duplexed with own device, to execute the request of readout so that the attribute information according to the request of readout be read out of another storage unit that is synchronized with the storage unit (11). Thus, the efficiency of reading out the attribute information according to the request of readout can be improved.

## Description

### [Technical Field]

The present invention relates to a monitoring control device, a server device, a monitoring control method, and a monitoring control program.

### [Background Art]

A server device includes components such as system boards for a CPU and memory, an input output (IO) device, a power supply, and a fan. Each of these components includes a sensor. A client, which is a terminal operating and managing a server device, acquires attribute information of the sensor included in each component via a service processor (SP) connected to the component inside the server device for monitoring the sensor.

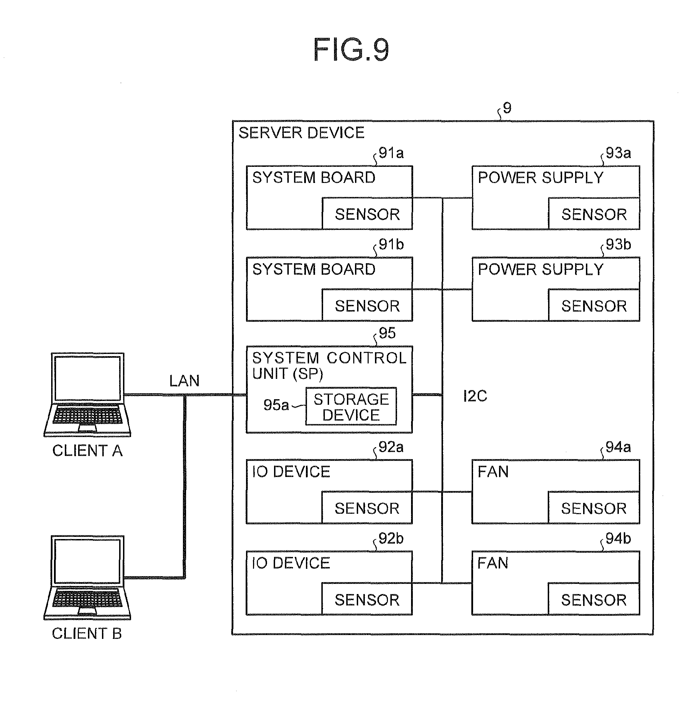

Here, a configuration of a conventional server device is described with reference to FIG. 9. FIG. 9 is a functional block diagram illustrating the configuration of a conventional server device. As illustrated in FIG. 9, a server device 9 includes system boards 91a and 91b, IO devices 92a and 92b, power supplies 93a and 93b, and fans 94a and 94b. Each of these components includes a sensor. The server device 9 connects the component and a system control unit (SP) 95 via, for example, an I2C bus. The system control unit 95 includes a storage device 95a storing the attribute information of the sensor of each component as an SDR (Sensor Data Record) repository.

Clients A and B are connected to the server device 9 via LAN (Local Area Network) and communicate with the system control unit 95. The clients A and B acquire attribute information of the sensor included in each component using commands that meet the specification of management interface of the server device called IPMI (Intelligent Platform Management Interface), for example. The client A, for example, issues the command, which requests the acquisition of a piece of sensor information of the SDR repository, to the system control unit 95. Upon the acquisition of this command, the system control unit 95 reads a piece of sensor information of the SDR repository out of the storage device 95a based on the acquired command, and notifies the client A of the read information. In this manner, the client A acquires the notified information in order to monitor the sensor included in each component.

### [Citation List]

### [Patent Citation]

Patent Literature 1: Japanese Laid-open Patent Publication No. 2001-92738
Patent Literature 2: Japanese Laid-open Patent Publication No. 02-278457
Patent Literature 3: Japanese Laid-open Patent Publication No. 04-283810

### [Summary of Invention]

### [Technical Problem]

In some conventional server devices, however, the readout efficiency deteriorates when the sensor information is read out of the SDR repository. For example, while the storage device storing the SDR repository is busy, in some cases, the readout of the sensor information is awaited and it takes time for completing the readout of the sensor information. In particular, the server device including a number of sensors reads out a number of pieces of sensor information of the sensors from the storage device; therefore, while the storage device storing the SDR repository is busy, it might take long time for completing the readout of the sensor information of all the sensors.

In other cases, when the sensor information of a particular SDR repository is read out, the server device fails to read out the sensor information of the particular SDR repository from the storage device storing the SDR repository due to the damage of the SDR, for example.

In other cases, when a client requests the updating of the sensor information of the SDR repository, the server device reserves the SDR on the sensor information whose updating has been requested. For this reason, even when a client, which is different from the client which has requested the updating, requests the same sensor information as the sensor information whose updating has been requested, in some cases, the server device does not read out the information until the reserved state of the SDR is released and therefore it takes time to complete the readout.

The technique according to this disclosure has been made in view of the above circumstances, and has an object to provide a monitoring control device and the like for improving the efficiency of reading out the SDR repository.

### [Solution to Problem]

According to an aspect of an embodiment, a monitoring control device includes a storage unit and a control unit. The storage unit stores attribute information on a component incorporated in a server device. The control unit determines whether, upon detection of a request for reading out the attribute information on the component from outside, readout of the attribute information from the storage unit according to the request of readout is possible or not and, when it is determined that the readout of the attribute information is impossible, ordering a control unit in a standby mode, which is duplexed with own device, to execute the request of readout so that the attribute information according to the request of readout be read out of another storage unit that is synchronized with the storage unit.

### [Advantageous Effects of Invention]

According to an aspect of the monitoring control device according to the present application, an advantageous effect of higher efficiency of reading out the attribute information on the component incorporated in the server device can be obtained.

### [Brief Description of Drawings]

FIG. 1 is a functional block diagram illustrating the configuration of a monitoring control device according to First Embodiment.
FIG. 2 is a functional block diagram illustrating the configuration of a server device according to Second Embodiment.
FIG. 3 illustrates an example of a data configuration of a GetSDR command.
FIG. 4 illustrates an example of a data configuration of SDR management information.
FIG. 5 is a flow chart illustrating the procedure of monitoring control processing according to Second Embodiment.
FIG. 6 is a sequence diagram of the monitoring control processing in the case where SDR repository is busy.
FIG. 7 is a sequence diagram of the monitoring control processing in the case where SDR repository is reserved.
FIG. 8 illustrates a computer executing a monitoring control program.
FIG. 9 is a functional block diagram illustrating the configuration of a conventional server device.

### [Embodiment for Carrying Out the Invention]

A monitoring control device, a server device, a monitoring control method, and a monitoring control program to be disclosed in the present application are specifically described below with reference to drawings. Note that the present invention is not limited to the embodiments below.

### [Embodiment]

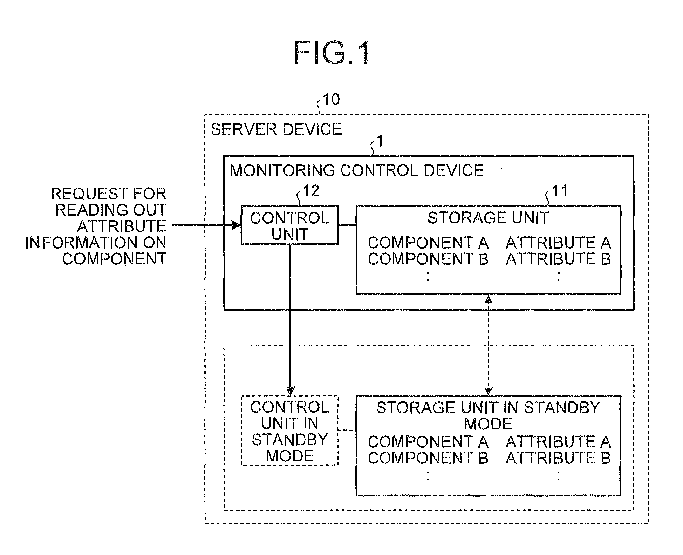

FIG. 1 is a functional block diagram illustrating the configuration of a monitoring control device 1 according to First Embodiment. As illustrated in FIG. 1, the monitoring control device 1 includes a storage unit 11 and a control unit 12.

The storage unit 11 stores the attribute information on components incorporated in a server device 10. Upon the detection of the request for reading out the attribute information on the component from outside, the control unit 12 determines whether the attribute information can be read out of the storage unit 11 according to the readout request.

When it has been determined that the readout of the attribute information from the storage unit 11 is impossible, the control unit 12 orders a control unit in a standby mode, which has been duplexed with itself, to execute the readout request so that the attribute information according to the readout request is read out of another storage unit which is synchronized with the storage unit 11.

In this manner, when it has been determined that the attribute information on the component cannot be read out, the monitoring control device 1 orders the control unit in the standby mode to execute the readout request. Therefore, in the monitoring control device 1, as long as the control unit in the standby mode can read out the attribute information according to the readout request from the other storage unit, the attribute information on the component can be read out because the other storage unit is synchronized with the storage unit 11; therefore, the efficiency of reading out the attribute information can be improved.

### [Configuration of server device according to Second Embodiment]

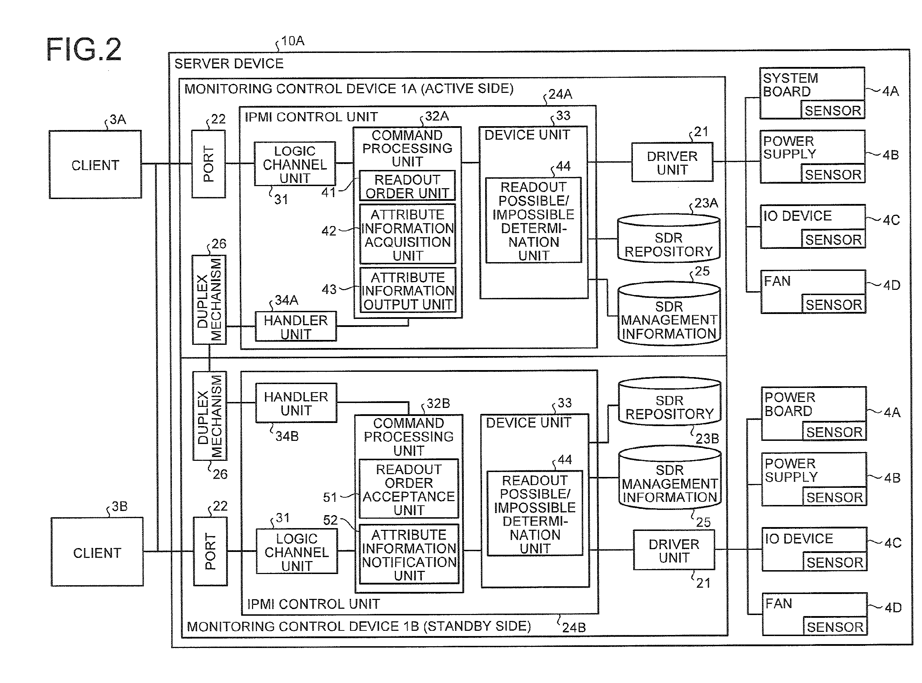

FIG. 2 is a functional block diagram illustrating the configuration of a server device 10A according to Second Embodiment. As illustrated in FIG. 2, the server device 10A includes a monitoring control device 1A and a monitoring control device 1B inside, which have been duplexed. Here, for the convenience of description, "active side" indicates that the monitoring control device 1A is in operation and "standby side" indicates that the monitoring control device 1B is in the standby mode. The server device 10A is based on the specification of IPMI (Intelligent Platform Management Interface). IPMI refers to a management interface of the server device 10A, and the standard specification that monitors the condition of the components incorporated in the server device 10A and manages the server device 10A. Note that the monitoring control device 1 is applicable to a print board, for example, but the present invention is not limited to this.

The monitoring control device 1A is connected to a system board 4A, a power supply 4B, an IO device 4C, and a fan 4D, which are plural components incorporated in the server device 10A. Each component is provided with a sensor. Moreover, the monitoring control device 1A includes driver units 21 connected to plural components, ports 22 connected to plural clients (3A and 3B), SDR (Sensor Data Record) repositories 23A and 23B, IPMI control units 24A and 24B, SDR management information 25, and duplex mechanisms 26.

The driver unit 21 is an interface between each sensor mounted on the component and the IPMI control unit 24A. The driver unit 21 is connected to the components via, for example, an I2C bus. The port 22 is an interface between the clients 3A and 3B and the IPMI control unit 24A, and corresponds to a socket in TCP/IP communication, for example. Upon the acceptance of the command (hereinafter called GetSDR command) for reading out the attribute information of the sensor issued from the client 3, the port 22 notifies the IPMI control unit 24A of the accepted command. This command is based on the specification of the IPMI.

The SDR repository 23A stores the attribute information of the sensor mounted on the component incorporated in the server device 10A in association with the sensor. The SDR repository 23A stores using one record for one sensor. The record storing the attribute information of one sensor is called "SDR". The attribute information of the sensor includes the address of the sensor, the sensor identification number, the sensor kind, and the upper and lower limit values of the sensor; however, the information is not limited to these as long as the information is related to the sensor.

Moreover, the SDR repository 23A is synchronized with the SDR repository 23B on the standby side. In other words, the updating of the SDR repository 23A leads to the updating of the SDR repository 23B on the standby side with the same information. Accordingly, the SDR repository 23A on the active side and the SDR repository 23B on the standby side share the attribute information of the same content.

The IPMI control unit 24A controls the processing performed based on the specification of the IPMI. The IPMI control unit 24A mutually communicates with the IPMI control unit 24B on the standby side through the duplex mechanism 26. Moreover, the IPMI control unit 24A includes a logic channel unit 31, a command processing unit 32A, a device unit 33, and a handler unit 34A. The logic channel unit 31 includes a plurality of channels. The channel included in the logic channel unit 31 associates the port 22 with the command processing unit 32A logically. In other words, the command processing unit 32A associated with the port 22 by the channel performs the command processing as described later.

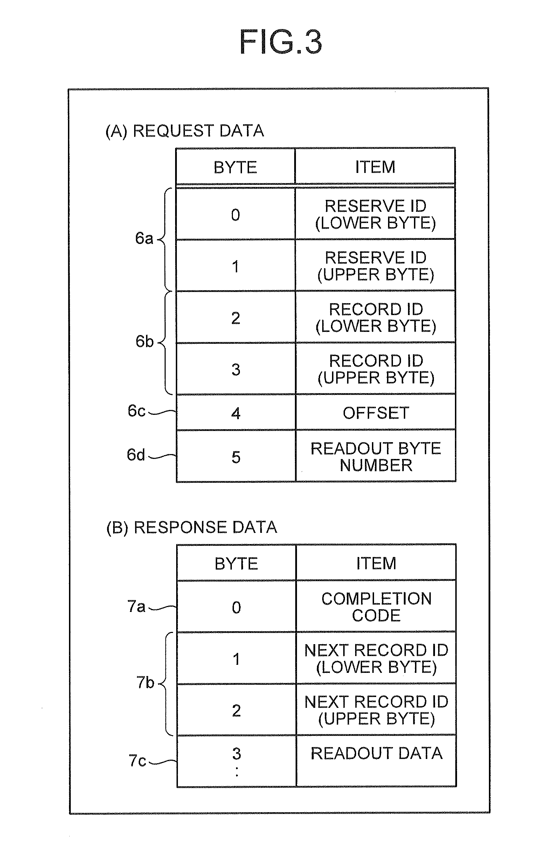

Upon the acceptance of the command that is based on the specification of the IPMI, the command processing unit 32A executes the processing corresponding to the accepted command. This command includes the GetSDR command for reading out the SDR from the SDR repository 23A, and a Reserve SDR Repository command for reserving the SDR repository 23A, for example. The device unit 33 accesses various devices such as the SDR repository 23A in accordance with the command processed by the command processing unit 32A. Here, the data configuration of the GetSDR command is described with reference to FIG. 3. FIG. 3(A) illustrates the data configuration of the request data of the GetSDR command, while FIG. 3(B) illustrates the data configuration of the response data of the GetSDR command.

As illustrated in FIG. 3(A), the request data of the GetSDR command includes reserve IDs 6a, record IDs 6b, an offset 6c, and a readout byte number 6d. The reserve IDs 6a correspond to the identification ID of the SDR to be reserved. In the reserve IDs 6a, the lower byte of the reserve IDs is set in the 0-th byte and the upper byte of the reserve IDs is set in the first byte. The record IDs 6b correspond to the identification ID of the SDR to be read out. In the record IDs 6b, the lower byte of the record IDs is set in the second byte and the upper byte of the record IDs is set in the third byte. The offset 6c corresponds to the start byte for reading out the data from the records corresponding to the record IDs 6b. The readout byte number 6d corresponds to the byte number to be read out.

As illustrated in FIG. 3(B), the response data of the GetSDR command includes a completion code 7a, next record IDs 7b, and readout data 7c. The completion code 7a indicates a result of reading out the attribute information of the sensor. In the completion code 7a, "0" which indicates that the readout result is normal and "1" which indicates that the readout result is abnormal are set. The next record IDs 7b correspond to the record ID of the record next to the record corresponding to the readout record ID 6b. In the readout data 7c, the attribute information read out from the record corresponding to the record ID 6b of the request data is set.

The command processing unit 32A acquires the request data of the GetSDR command for reading out the attribute information of the specified sensor, analyzes the acquired request data, and orders the device unit 33 to read the SDR repository based on the analysis result. The order of reading the SDR repository includes the record IDs 6b, the offset 6c, and the readout byte number 6d set in the request data.

The command processing unit 32A acquires the result of readout from the device unit 33, and when the acquired result of readout is normal, creates the response data based on the result of readout. Then, the command processing unit 32A outputs the created response data to the logic channel unit 31. Meanwhile, the process of the command processing unit 32A in the case where the result of readout is abnormal is described later in detail.

The command processing unit 32A includes a readout order unit 41, an attribute information acquisition unit 42, and an attribute information output unit 43. When the result of readout is abnormal, the readout order unit 41 orders the standby side to execute the request for reading out the attribute information from the standby-side SDR repository 23B. The case where the result of readout is abnormal means the case where the readout of the attribute information of the sensor mounted on the component from the SDR repository 23A is impossible. More specifically, when a readout possible/impossible determination unit 44 has determined that the readout of the attribute information of the specified sensor is impossible, the readout order unit 41 orders the handler unit 34A to transmit the request data of the GetSDR command to the standby side.

The attribute information acquisition unit 42 acquires from the standby side, the response to the order of executing the readout request. Specifically, the attribute information acquisition unit 42 acquires the response data for the GetSDR command ordered by the readout order unit 41 from the handler unit 34A and outputs the acquired response data to the attribute information output unit 43. As long as the completion code 7a is normal, the attribute information of the specified sensor is set in the readout data 7c in the response data.

The attribute information output unit 43 outputs the response data acquired by the attribute information acquisition unit 42 to the request origin which has requested the readout. In other words, as long as the response data are normal, the attribute information output unit 43 outputs the response data including the attribute information of the specified sensor to the client 3, which is the request origin that has requested the readout.

The device unit 33 includes the readout possible/impossible determination unit 44. The readout possible/impossible determination unit 44 determines whether the readout of the attribute information of the sensor from the SDR repository 23A according to the order of reading the SDR repository from the command processing unit 32A is possible or not. Specifically, the readout possible/impossible determination unit 44 determines whether the SDR repository 23A is in a reserved state or not based on the SDR management information 25 storing the management information of the SDR included in the SDR repository 23A.

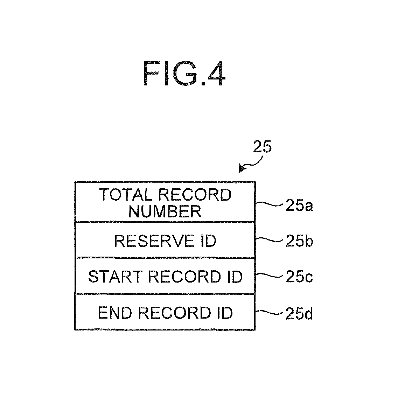

Here, the data configuration of the SDR management information 25 is described with reference to FIG. 4. FIG. 4 illustrates an example of the data configuration of the SDR management information. As illustrated in FIG. 4, the SDR management information 25 stores a total record number 25a, a reserve ID 25b, a start record ID 25c, and an end record ID 25d while they are associated with each other. The total record number 25a corresponds to the total number of SDRs. The reserve ID 25b corresponds to the record ID in the reserved state.
The start record ID 25c corresponds to the record ID of the start record. The end record ID 25d corresponds to the record ID of the end record. That is to say, the readout possible/impossible determination unit 44 determines whether the record ID 6b included in the order of reading the SDR repository coincides with the reserve ID 25b of the SDR management information 25.

When it has been determined that the SDR repository 23A is in the reserved state, the readout possible/impossible determination unit 44 determines that the readout of the SDR from the SDR repository 23A is impossible and then, notifies the readout order unit 41 of the readout result that the abnormality has occurred due to the reserved state. When it has been determined that the SDR repository 23A is not in the reserved state, the readout possible/impossible determination unit 44 determines whether the SDR repository 23A is busy or not. When it has been determined that the SDR repository 23A is busy, the readout possible/impossible determination unit 44 determines that the readout of the SDR from the SDR repository 23A is currently impossible, and then notifies the readout order unit 41 of the readout result that abnormality has occurred due to the busy state. Moreover, when it has been determined that the SDR repository 23A is not busy, the readout possible/impossible determination unit 44 reads out the attribute information of the specified sensor from the SDR repository 23A.

Moreover, the readout possible/impossible determination unit 44 determines whether the readout attribute information is damaged or not. When it has been determined that the readout attribute information is damaged, the readout possible/impossible determination unit 44 determines that the readout of the SDR from the SDR repository is impossible and then, notifies the readout order unit 41 of the readout result that abnormality has occurred due to the damage of the SDR. When it has been determined that the readout attribute information is not damaged, the readout possible/impossible determination unit 44 outputs to the command processing unit 32A, the normal readout result including the readout attribute information of the sensor.

The handler unit 34A is an interface between the command processing unit 32A and the duplex mechanism 26. Specifically, the handler unit 34A transmits the request data of the GetSDR command ordered from the readout order unit 41 to the standby side via the duplex mechanism 26. Moreover, the handler unit 34A outputs to the attribute information acquisition unit 42, the response data to the GetSDR command processed by the standby side.

The monitoring control device 1B on the standby side has substantially the same configuration as the monitoring control device 1A; therefore, the same configuration as the monitoring control device 1A is denoted with the same reference signs and description of the redundant configuration is omitted. The monitoring control device 1B is different from the monitoring control device 1A in that the handler unit 34A is replaced by a handler unit 34B and the SDR repository 23A is replaced by the SDR repository 23B. Moreover, the monitoring control device 1B is different from the monitoring control device 1A in that a command processing unit 32B includes a readout order acceptance unit 51 and an attribute information notification unit 52.

The SDR repository 23B is in synchronization with the SDR repository 23A on the active side as aforementioned. In other words, the SDR repository 23B and the SDR repository 23A share the equivalent attribute information.

The handler unit 34B is an interface between the command processing unit 32B and the duplex mechanism 26. Specifically, the handler unit 34B acquires the request data of the GetSDR command ordered from the active side via the duplex mechanism 26 on the standby side, and outputs the acquired request data to the readout order acceptance unit 51. The handler unit 34B notifies the response data notified by the attribute information notification unit 52 to the active side via the duplex mechanism 26.

The readout order acceptance unit 51 accepts the request data of the GetSDR command from the handler unit 34B, analyzes the accepted request data, and orders the device unit 33 to read the SDR repository based on the analysis result. The attribute information notification unit 52 acquires the readout result from the device unit 33 and creates the response data based on the acquired readout result. Then, the command processing unit 32B outputs the created response data to the handler unit 34B. As long as the completion code 7a is normal, the attribute information of the specified sensor is set in the readout data 7c in the response data.

### [Procedure of monitoring control processing according to Second Embodiment]

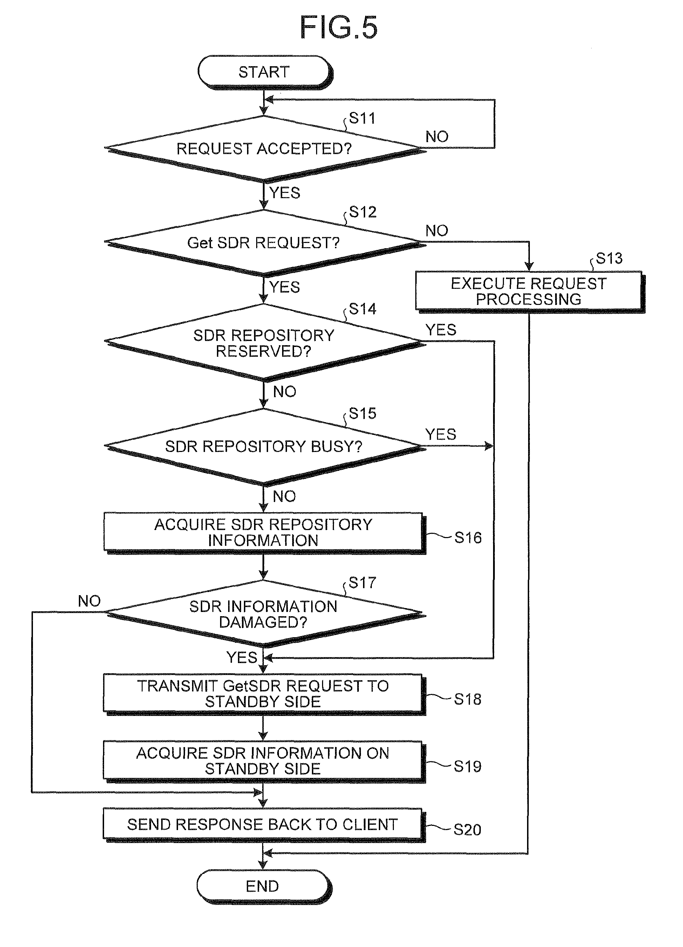

Next, the sequence of the monitoring control processing is described with reference to FIG. 5. FIG. 5 is a flow chart of the procedure of the monitoring control processing according to Second Embodiment.

First, the command processing unit 32A determines whether the request has been accepted from the client 3 (Step S11). Then, when it has been determined that the request is not accepted (No in Step S11), the command processing unit 32A waits until the request is accepted. Meanwhile, when it has been determined that the request is accepted (Yes in Step S11), the command processing unit 32A determines whether the accepted request is the GetSDR command or not (Step S12).

Then, when it has been determined that the accepted request is not the GetSDR command (No in Step S12), the command processing unit 32A executes the command processing of the corresponding request (Step S13). On the other hand, when it has been determined that the accepted request is the GetSDR command (Yes in Step S12), the readout possible/impossible determination unit 44 determines whether the SDR repository 23A is in the reserved state or not (Step S14).

Then, when it has been determined that the SDR repository 23A is in the reserved state (Yes in Step S14), the readout possible/impossible determination unit 44 determines that the readout of the SDR from the SDR repository 23A is impossible and then, the processing proceeds to Step S18. Meanwhile, when it has been determined that the SDR repository 23A is not in the reserved state (No in Step S14), the readout possible/impossible determination unit 44 determines whether the SDR .23A is busy or not (Step S15).

Then, when it has been determined that the SDR repository 23A is busy (Yes in Step S15), the readout possible/impossible determination unit 44 determines that the readout of the SDR from the SDR repository 23A is currently impossible and then the processing proceeds to Step S18. Meanwhile, when it has been determined that the SDR repository 23A is not busy (No in Step S15), the readout possible/impossible determination unit 44 reads out the attribute information of the sensor specified by the GetSDR command from the SDR repository 23A (Step S16).

Subsequently, the readout possible/impossible determination unit 44 determines whether the read attribute information is damaged or not (Step S17). When it has been determined that the read attribute information is not damaged (No in Step S17), the readout possible/impossible determination unit 44 determines that the readout of the attribute information has been possible and then, the processing proceeds to Step S20.

Meanwhile, when it has been determined that the read attribute information is damaged (Yes in Step S17), the readout possible/impossible determination unit 44 determines that the readout of the SDR from the SDR repository 23A has been impossible and then, the processing proceeds to Step S18.

Subsequently, when the readout of the SDR from the SDR repository 23A is impossible, the readout order unit 41 transmits the request data of the GetSDR command to the standby side (Step S18). That is, as aforementioned, in some cases, the SDR repository 23A is in the reserved state, the SDR repository 23A is busy, or the read attribute information is damaged. In those cases, the readout order unit 41 orders the standby side to execute the readout request so that the attribute information of the sensor is read out on the standby side.

Then, the attribute information acquisition unit 42 acquires the SDR information (response data) for the GetSDR command from the standby side (Step S19). That is, as long as the value of the completion code 7a of the response data indicates the normality (for example, "0"), the attribute information acquisition unit 42 acquires the normal attribute information of the sensor read out from the SDR repository 23B on the standby side.

After that, the attribute information output unit 43 sends back the response data to the client 3 which has requested the GetSDR command (Step S20).

### [Sequence of monitoring control processing while the SDR repository is busy]

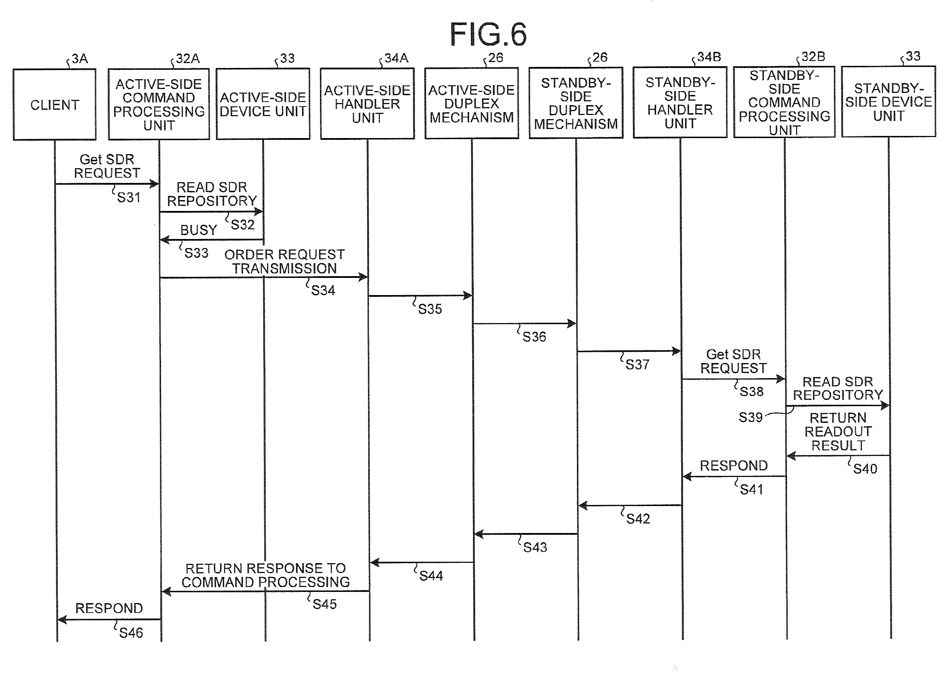

Next, the sequence of the monitoring control processing while the SDR repository 23A on the active side is busy is described with reference to FIG. 6. FIG. 6 is the sequence diagram of the monitoring control processing in the case where the SDR repository is busy.

First, a client 3A issues the GetSDR command to the server device 10A for reading out the attribute information of the sensor (Step S31). Then, the command processing unit 32A on the active side orders the device unit 33 to read the SDR repository based on the acquired request data of the GetSDR command (Step S32).

The readout possible/impossible determination unit 44 of the device unit 33 determines whether the readout of the attribute information of the sensor from the SDR repository 23A according to the request of reading the SDR repository is possible or not. Specifically, the readout possible/impossible determination unit 44 attempts the readout of the SDR which has been requested. Here, since the SDR which has been attempted to be read out is busy, the readout possible/impossible determination unit 44 determines that readout of the SDR from the SDR repository 23A is currently impossible, and then notifies the readout order unit 41 of the readout result that abnormality has occurred due to the busy state (Step S33).

Subsequently, since the readout result is abnormal, the readout order unit 41 of the command processing unit 32A orders the handler unit 34A to transmit the request data of the GetSDR command to the standby side (Step S34). Then, the handler unit 34A transmits to the handler unit 34B on the standby side via the duplex mechanism 26, the request data of the GetSDR command ordered by the readout order unit 41 (Steps S35 to S37).

Subsequently, the handler unit 34B on the standby side outputs the request data of the GetSDR command transmitted from the duplex mechanism 26 on the its own side to the readout order acceptance unit 51 of the command processing unit 32B (Step S38). Then, the readout order acceptance unit 51 orders the device unit 33 to read the SDR repository based on the request data of the GetSDR command accepted from the handler unit 34B (Step S39).

Subsequently, the device unit 33 on the standby side attempts to read out the SDR which has been requested to be read out from the SDR repository, and returns the readout result to the attribute information notification unit 52 of the command processing unit 32B (Step S40). Then, the attribute information notification unit 52 acquires the readout result from the device unit 33, creates the response data based on the acquired readout result, and notifies the handler unit 34B of the created response data (Step S41).

Then, the handler unit 34B on the standby side transmits the response data notified by the attribute information notification unit 52 to the handler unit 34A on the active side via the duplex mechanism 26 (Steps S42 to S44). Then, the handler unit 34A on the active side returns the response data transmitted from the duplex mechanism 26 on its own side to the attribute information acquisition unit 42 of the command processing unit 32A (Step S45). Next, the attribute information output unit 43 of the command processing unit 32A returns the response data acquired by the attribute information acquisition unit 42 to the client 3A (Step S46).

Note that FIG. 6 depicts the sequence of the monitoring control processing in the case where the SDR repository 23A on the active side is busy. FIG. 6 is, however, not limited to this, and may apply to the case where the SDR read out from the SDR repository 23A on the active side is damaged. In this case, the readout possible/impossible determination unit 44 in Step S33 attempts to read out the SDR which has been requested to be read out. Then, since the readout SDR is damaged, the readout possible/impossible determination unit 44 determines that the readout of the SDR from the SDR repository 23A has been impossible and then, notifies the readout order unit 41 of the readout result that abnormality has occurred due to the damage of the SDR.

### [Sequence of monitoring control processing in the case where SDR repository is reserved]

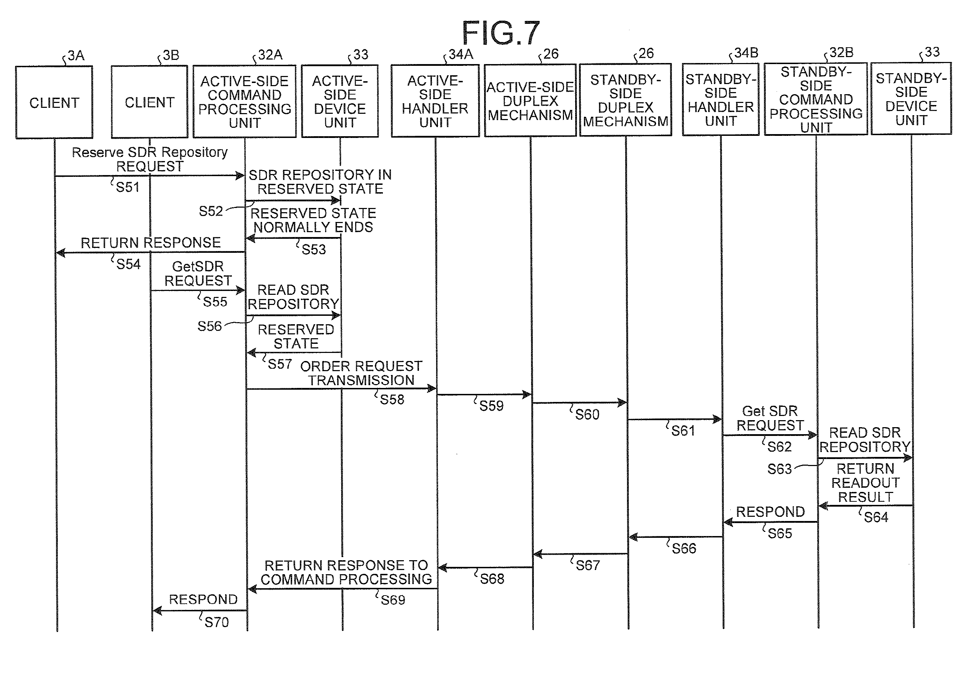

Next, the sequence of the monitoring control processing in the case where the SDR repository 23A on the active side is reserved is described with reference to FIG. 7. FIG. 7 is a sequence diagram of the monitoring control processing in the case where the SDR repository is reserved.

First, the client 3A issues the Reserve SDR Repository command to the server device 10A for reserving the SDR repository 23A (Step S51). Then, the command processing unit 32A on the active side orders the device unit 33 to reserve the SDR repository based on the request data of the acquired Reserve SDR Repository command (Step S52).

Next, the device unit 33 makes the SDR repository 23A reserved according to the reserve order of the SDR repository, and returns the response data for normal reserve to the command processing unit 32A (Step S53). Moreover, the command processing unit 32A returns the response data acquired from the device unit 33 to the client 3A (Step S54).

After that, the client 3B issues the GetSDR command to the server device 10A for reading out the attribute information of the sensor (Step S55). Then, the command processing unit 32A on the active side orders the device unit 33 to read the SDR repository based on the acquired request data of the GetSDR command (Step S56).

Then, the readout possible/impossible determination unit 44 of the device unit 33 determines whether the readout of the attribute information of the sensor from the SDR repository 23A according to the request of reading the SDR repository is possible or not. Here, since the SDR repository 23A is in the reserved state, the readout possible/impossible determination unit 44 determines that the readout of the SDR from the SDR repository 23A is impossible and then, notifies the readout order unit 41 of the readout result that abnormality has occurred due to the reserved state (Step S57).

As for the subsequent processing (processing from Steps S58 to S70), the operation of the same content as the monitoring control processing (Steps S34 to S46) in the case where the SDR repository is busy as illustrated in FIG. 6 is executed; therefore, the redundant processing is not described.

### [Advantageous effect of Second Embodiment]

According to Second Embodiment, the readout possible/impossible determination unit 44 of the IPMI control unit 24A determines whether readout of the attribute information on the component from the SDR repository 23A according to the readout request is possible or not. Then, when the readout possible/impossible determination unit 44 of the IPMI control unit 24A has determined that the readout of the attribute information on the component from the SDR repository 23A is impossible, the readout order unit 41 of the IPMI control unit 24A orders the standby side to execute the readout request. Then, the attribute information acquisition unit 42 of the IPMI control unit 24A acquires from the standby side, the attribute information for the readout request ordered from the standby side by the readout order unit 41. According to this configuration, when it has been determined that the readout of the attribute information on the component from the SDR repository 23A is impossible, the IPMI control unit 24A acquires the attribute information, whose readout has been failed, from the SDR repository 23B on the standby side. As a result, the IPMI control unit 24A can improve the efficiency of reading out the attribute information on the component.

Moreover, according to Second Embodiment, the attribute information output unit 43 of the IPMI control unit 24A outputs the attribute information acquired by the attribute information acquisition unit 42 to the request origin which has requested the readout. According to this configuration, the attribute information output unit 43 outputs the acquired attribute information to the request origin. Therefore, the request origin can acquire the requested attribute information without considering the active side and the standby side.

According to Second Embodiment above, the readout possible/impossible determination unit 44 of the IPMI control unit 24A determines whether readout of the attribute information from the SDR repository 23A is possible or not depending on the presence or absence of the busy state of the SDR repository 23A. According to this configuration, even though the readout possible/impossible determination unit 44 has been determined that the readout of the attribute information is impossible because of the busy state, the standby time due to the busy state can be avoided as long as the IPMI control unit 24A can read out the attribute information from the standby side. As a result, the readout possible/impossible determination unit 44 can improve the efficiency of reading out the attribute information.

Moreover, according to Second Embodiment above, the SDR repository 23A of the IPMI control unit 24A stores the attribute information on the sensor mounted on the component. According to this configuration, the IPMI control unit 24A can improve the efficiency of reading out the attribute information on the sensor mounted on the component.

### [Program, etc.]

Note that the server device 10A can be achieved by mounting various functions such as the duplex IPMI control unit 24A as above on an information processing device such as a known personal computer or work station.

Moreover, each structure element of each device illustrated is not necessarily configured physically as illustrated. That is to say, specific modes of dispersion and integration of the devices are not limited to the illustrated ones, and the entire device or a part thereof may be configured while being functionally or physically dispersed or integrated per arbitrary unit in accordance with usage or load of each kind. For example, the attribute information acquisition unit 42 and the attribute information output unit 43 may be integrated as one part. On the other hand, the readout possible/impossible determination unit 44 may be dispersed into a reserve state determination unit that determines whether the state is the reserved state or not, a busy state determination unit that determines whether the state is busy or not, and an attribute information damage determination unit that determines whether the readout attribute information is damaged or not. Moreover, the storage unit of the SDR repository 23A, the SDR management information 25, or the like may be connected via network as an external device of the server device 10A.

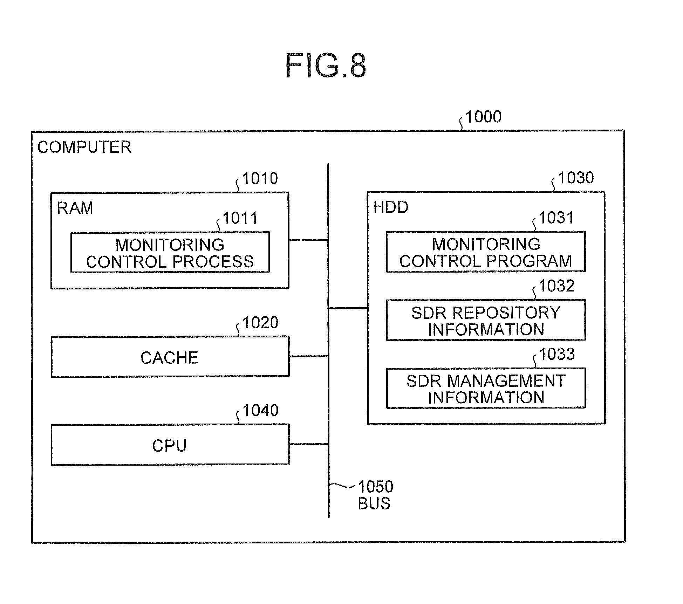

Further, various kinds of processing described above in the embodiments can be achieved by executing prepared programs on a computer such as a personal computer or a work station. Now, with reference to FIG. 8, description is made of an example of a computer that executes a monitoring control program having a similar function to the IPMI control unit 24A illustrated in FIG. 2.

FIG. 8 illustrates a computer executing the monitoring control program. As illustrated in FIG. 8, a computer 1000 includes a RAM (Random Access Memory) 1010, a cache 1020, an HDD 1030, a CPU (Central Processing Unit) 1040, and a bus 1050. The RAM 1010, the cache 1020, the HDD 1030, and the CPU 1040 are connected via the bus 1050.

The HDD 1030 stores a monitoring control program 1031 having a similar function to the IPMI control unit 24A illustrated in FIG. 2. The HDD 1030 stores SDR repository information 1032 corresponding to the SDR repository 23A illustrated in FIG. 2 and SDR management information 1033 corresponding to the SDR management information 25 illustrated in FIG. 2.

The monitoring control program 1031 functions as a monitoring control process 1011 when the CPU 1010 reads out the monitoring control program 1031 from the HDD 1030 and develops the program on the RAM 1010. The monitoring control process 1011 develops the information read out from the SDR repository information 1032 and the SDR management information 1033 and the like on a region allocated to itself on the RAM 1010 as appropriate, and executes various data processing based on the developed data and the like.

Note that the monitoring control program 1031 is not necessarily stored in the HDD 1030, and alternatively, this program may be stored in a storage medium such as a CD-ROM and the computer 1000 may read out and execute the program. Further alternatively, this program may be stored in another computer (or server) or the like connected to the computer 1000 via a public line, the Internet, LAN (Local Area Network), WAN (Wide Area Network), or the like. In this case, the computer 1000 reads out the program from these and executes the program.

### [Explanation of Reference]

1, 1A, 1B MONITORING CONTROL DEVICE
10, 10A SERVER DEVICE
3A, 3B CLIENT
4A SYSTEM BOARD
4B POWER SUPPLY
4C IODEVICE
4D FAN
21 DRIVER UNIT
22 PORT
23A, 23B SDR REPOSITORY
24A, 24B IPMI CONTROL UNIT
25 SDR MANAGEMENT INFORMATION
26 DUPLEX MECHANISM
31 LOGIC CHANNEL UNIT
32A, 32B COMMAND PROCESSING UNIT
33 DEVICE UNIT
34A, 34B HANDLER UNIT
41 READOUT ORDER UNIT
42 ATTRIBUTE INFORMATION ACQUISITION UNIT
43 ATTRIBUTE INFORMATION OUTPUT UNIT
44 READOUT POSSIBLE/IMPOSSIBLE DETERMINATION UNIT
51 READOUT ORDER ACCEPTANCE UNIT
52 ATTRIBUTE INFORMATION NOTIFICATION UNIT

## Claims

1. A monitoring control device comprising:
a storage unit that stores attribute information on a component incorporated in a server device; and
a control unit that determines whether, upon detection of a request for reading out the attribute information on the component from outside, readout of the attribute information from the storage unit according to the request of readout is possible or not and, when it is determined that the readout of the attribute information is impossible, ordering a control unit in a standby mode, which is duplexed with own device, to execute the request of readout so that the attribute information according to the request of readout be read out of another storage unit that is synchronized with the storage unit.

2. The monitoring control device according to claim 1, wherein the control unit comprises:
a readout possible/impossible determination unit that determines whether readout of the attribute information on the component from the storage unit according to the request of readout is possible or not;
a readout order unit that orders, when the readout possible/impossible determination unit determines that the readout of the attribute information on the component from the storage unit is impossible, the control unit in the standby mode to execute the request of readout; and
an attribute information acquisition unit that acquires from the control unit in the standby mode, the attribute information for the execution of the request of readout ordered by the readout order unit.

3. The monitoring control device according to claim 2, further comprising an attribute information output unit that outputs to a request origin which has requested the readout, the attribute information acquired by the attribute information acquisition unit.

4. The monitoring control device according to claim 2, wherein the readout possible/impossible determination unit determines whether readout of the attribute information from the storage unit is possible or not depending on presence or absence of a busy state of the storage unit.

5. The monitoring control device according to claim 1, wherein the storage unit stores the attribute information on a sensor mounted on the component.

6. A monitoring control method for monitoring a component incorporated in a server device with a monitoring control device, the monitoring control method comprising:
determining, upon detection of a request for reading out attribute information on the component from outside, readout of the attribute information from a storage unit storing the attribute information on the component according to the request of readout is possible or not; and
ordering, when it is determined that the readout of the attribute information on the component from the storage unit is impossible in the determining, the monitoring control device in a standby mode, which is duplexed with the monitoring control device, to execute the request of readout so that the attribute information according to the request of readout be read out of another storage unit that is synchronized with the storage unit.

7. A monitoring control program that causes computer to execute the procedure, the monitoring control program comprising:
determining, upon detection of a request for reading out attribute information on the component incorporated in a server device from outside, readout of the attribute information from a storage unit storing the attribute information on the component according to the request of readout is possible or not; and
ordering, when it is determined that the readout of the attribute information on the component is impossible in the determining, a monitoring control program in a standby mode, which is duplexed with own monitoring control program, to execute the request of readout so that the attribute information according to the request of readout be read out of another storage unit that is synchronized with the storage unit.
